# EUROPÄISCHE PATENTANMELDUNG

(11) **EP 0 905 952 A1**
(43) Veröffentlichungstag der Anmeldung: **31.03.1999**
(21) Anmeldenummer: 98116146.6
(22) Anmeldetag: 27.08.1998
(51) Int. Cl.: H04M 1/274, G06F 17/30

(54) **Verfahren zur Erweiterung des Informationsinhaltes für ein elektronisches Telekommunikationsverzeichnis**

(30) Priorität: 29.09.1997 DE 19744139
(71) Anmelder: Deutsche Telekom AG, 53113 Bonn (DE)
(72) Erfinder: Knoppik, Norbert, Dr., 53572 Unkel (DE)

(57) **Zusammenfassung**

Das erfindungsgemäße Verfahren ist darauf ausgerichtet, den Informationsinhalt und den Wiedererkennungswert von Dateneinträgen in elektronischen Telekommunikationsverzeichnissen zu erhöhen.

Erfindungsgemäß werden bereits gespeicherten alphanumerischen Dateneinträgen zusätzliche multimediale Daten wie Standbilder, Bewegtbilder und Tondaten abfragbar zugeordnet, so daß sich der Informationsinhalt und der Wiedererkennungswert der betreffenden Dateneinträge wesentlich erhöht.

Das erfindungsgemäße Verfahren eignet sich insbesondere zur Erweiterung des Informationsgehaltes von Telekommunikationsverzeichnissen wie Telefonbüchern, Branchenverzeichnissen und Ortskennzahlenverzeichnissen.

## Beschreibung

Bei der erfindungsgemäßen Lösung handelt es sich um ein Verfahren zur Erweiterung des Informationsinhaltes für ein elektronisches Telekommunikationsverzeichnis.

Die bekannten elektronischen Telekommunikationsverzeichnisse beinhalten überwiegend einfache Texteinträge, welche ausschließlich aus alphanumerischen Zeichen bestehen. Der Informationsinhalt der Texteinträge ist zumeist auf einige wesentliche Informationen begrenzt. Der Informationsinhalt eines derartigen Texteintrages ist daher in der Regel gering. Es ist daher auch bei derartigen Texteinträgen von einem geringen Wiedererkennungswert auszugehen.

Die technische Aufgabe, die gelöst wird, besteht darin, den Informationsinhalt von ausgewählten Einträgen in Telekommunikationsverzeichnissen zu erhöhen und damit den Wiedererkennungswert der im Dateneintrag enthaltenen Information zu erhöhen.

Erfindungsgemäß wird ein aus alphanumerischen Zeichen bestehender Texteintrag durch Informationen ergänzt, die geeignet sind, den Informationsinhalt des Texteintrages zu erweitern und damit zu erhöhen. Dabei werden den bereits gespeicherten alphanumerischen Daten zusätzliche multimediale Daten wie Standbilder, Bewegtbilder und Tondaten zugeordnet, so daß der Informationsinhalt der betreffenden Einträge eine Erweiterung erfährt. Die zusätzlichen multimedialen Daten werden vorzugsweise in zusätzliche Datenspeicher, z. B. CD, eingespeichert. Die Abfrage der zusätzlichen multimedialen Einträge wird durch eine Erweiterung der bereits vorhandenen Software zur Abfrage der Telekommunikationsverzeichnisse ermöglicht.

Das erfindungsgemäße Verfahren eignet sich insbesondere zur Erweiterung des Informationsgehaltes von Telekommunikationsverzeichnissen wie Telefonbüchern, Branchenverzeichnissen und Ortskennzahlenverzeichnissen.
Insbesondere bei Branchenverzeichnissen, wie beispielsweise den "Gelben Seiten" der Telekom, wird ein bevorzugtes Anwendungsgebiet der erfindungsgemäßen Lösung gesehen, da das erfindungsgemäße Verfahren geeignet ist, z. B. Corporate-Design-Elemente (z. B. Firmenlogos) der einzelnen im Branchenverzeichnis verzeichneten Unternehmen sowie zusätzliche Informationen zum Geschäftsfeld und zu Geschäftsverbindungen des Unternehmens in geeigneter Form darzustellen. Durch das erfindungsgemäße Verfahren wird den Unternehmen gleichzeitig eine Werbemöglichkeit zur Selbstdarstellung eröffnet.
Bei Ortskennzablenverzeichnissen bietet es sich beispielsweise an, Zusatzinformationen über Ortschaften entsprechend dem erfindungsgemäßen Verfahren in das Ortskennzahlenverzeichnis einzubringen. Diese Zusatzinformationen könnten für die Touristikwerbung aber auch für die Ansiedlung von Gewerbebetrieben von Nutzen sein.

Telefonverzeichnisse könnten beispielsweise neben der alphanumerischen Information zum Teilnehmer durch ein Bild des Teilnehmers ergänzt werden. Hierzu eignen sich insbesondere Gesichtsbilder von Teilnehmern bzw. von Teilnehmergruppen, wie sie beispielsweise in Ausweisen Anwendung finden. Diese Ergänzung, die im Einverständnis mit dem Teilnehmer erfolgen muß, wird mit breiter Einführung von Bildtelefonen an Bedeutung gewinnen. Sie ist insbesondere für die Unterscheidung von Teilnehmern mit gleichem Namen geeignet, die der Anrufer zwar visuell kennt, von denen ihm auch der Wohnort, aber nicht die genaue Adresse (Straße/Hausnummer) bekannt ist.

Aufgrund des umfangreichen Informationsgehaltes, beispielsweise für zusätzliche Informationen in Branchenverzeichnisen, bietet es sich an, die zusätzlichen multimedialen Daten vor der Abspeicherung auf einem geeigneten Speichermedium einer Datenkomprimation zu unterziehen.

## Patentansprüche

1. Verfahren zur Erweiterung des Informationsinhaltes für ein elektronisches Telekommunikationsverzeichnis, bei dem die Einträge aus alphanumerischen Daten bestehen, **dadurch gekennzeichnet,** daß bereits gespeicherten alphanumerischen Dateieinträgen zusätzliche multimediale Dateneinträge, wie Standbilder, Bewegtbilder und Tondaten abfragbar zugeordnet werden, so daß sich der Informationsinhalt und der Wiedererkennungswert der betreffenden Dateneinträge wesentlich erhöht.

2. Verfahren nach Anspruch 1, dadurch gekennzeichnet, daß die zusätzlichen multimedialen Daten einer Datenkomprimierung unterzogen werden.

3. Verfahren nach Anspruch 1 und 2, dadurch gekennzeichnet, daß das Telekommunikationsverzeichnis ein elektronisches Telefonverzeichnis ist.

4. Verfahren nach Anspruch 1 und 2, dadurch gekennzeichnet, daß das Telekommunikationsverzeichnis ein elektronisches Ortskennzahlenverzeichnis ist.

5. Verfahren nach Anspruch 1 und 2, dadurch gekennzeichnet, daß das Telekommunikationsverzeichnis ein elektronisches Branchenverzeichnis ist.
